(19) Europäisches Patentamt
European Patent Office
Office européen des brevets

(11) **EP 3 314 039 B1**

(12) **EUROPEAN PATENT SPECIFICATION**

(45) Date of publication and mention
of the grant of the patent:
**29.01.2020 Bulletin 2020/05**

(51) Int Cl.:
*C23G 5/00* *(2006.01)*  *B08B 7/00* *(2006.01)*
*C21D 9/56* *(2006.01)*  *C21D 1/52* *(2006.01)*
*C22F 1/04* *(2006.01)*  *F23G 7/05* *(2006.01)*
*F27B 9/28* *(2006.01)*  *F27D 99/00* *(2010.01)*

(21) Application number: **16733297.2**

(22) Date of filing: **21.06.2016**

(86) International application number:
**PCT/EP2016/001054**

(87) International publication number:
**WO 2016/206799 (29.12.2016 Gazette 2016/52)**

(54) **PROCESS TO DEGREASE METAL FOIL/SHEET AND TO ADJUST GRAIN SIZE**

VERFAHREN ZUM ENTFETTEN VON METALLFOLIE/-BLECH UND VERFAHREN ZUM ANPASSEN DER KORNGRÖSSE

PROCÉDÉ PERMETTANT DE DÉGRAISSER UNE FEUILLE/TÔLE MÉTALLIQUE ET DE RÉGLER LA GROSSEUR DE GRAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2015 EP 15001883**
**25.08.2015 EP 15002514**

(43) Date of publication of application:
**02.05.2018 Bulletin 2018/18**

(73) Proprietor: **Linde Aktiengesellschaft**
**80331 München (DE)**

(72) Inventors:
• **GRIPENBERG, Henrik**
**S-183 50 Täby (SE)**
• **RANGMARK, Lennart**
**S-125 55 Älvsjö (SE)**
• **NIEHOFF, Thomas**
**81735 München (DE)**

(74) Representative: **Gellner, Bernd**
**Linde AG**
**Technology & Innovation**
**Corporate Intellectual Property**
**Dr.-Carl-von-Linde-Straße 6-14**
**82049 Pullach (DE)**

(56) References cited:
WO-A1-2014/053657   WO-A2-2004/038057
GB-A- 644 581   US-A- 3 052 014
US-A- 3 924 035

**Description**

The present invention relates to a process to degrease a non-steel metal foil or sheet where the non-steel metal foil or sheet is contaminated with a lubricant, where the contaminated foil or sheet is coiled.

Aluminium foil, normally having a thickness of 6 - 200 micrometers, is manufactured by cold rolling. Lubricants are used in the cold rolling process. For most aluminium foil applications the lubricants must be removed after the cold rolling process.

Aluminium and copper sheets are manufactured by hot or cold rolling. Again, lubricants are used for rolling the sheet. The sheets often have a thickness between 0,2 and 3 mm or more.

A common process to remove the lubricants is to anneal the foil or sheet coils in a batch chamber furnace at 250 - 400 degrees Celsius.

During this process the lubricant can evaporate and diffuse through the thin air gaps between the layers of foil or sheet in the coil. This process can take up to 100 hours.

The temperature must increase slowly, else the up to 1 meter thick coil may crack. The chamber furnace has a high energy consumption, such as 1300 Kwh per ton coil. Further, the mechanical properties of the foil or sheet may be influenced. For example, there may be a soft annealing effect on aluminium at said temperatures. Therefore, foils or sheets with high requirements on hardness and strength are treated with chemicals at lower temperatures to remove the lubricant. Chemical treatment processes are continuous processes.

As an alternative to chemical treatment there are developments to treat the foil with plasma. Ions from the plasma oxidize the lubricant and thereby remove the lubricant. Such processes are continuous and are said not to influence the mechanical properties of the foil.

In US 7,763,117 a method is disclosed where a steel strip contaminated with oils is cleaned from the contaminates by subjection the steel strip with DFI (Direct Flame Impingement) burners in order to burn away the contaminants in a continuous process. Since there is a steel trip there is no problem having a relatively high temperature on the surface of the strip without effecting the mechanical properties of the steel strip material.

US 3 052 014 A discloses a process to degrease a coiled aluminum foil or sheet contaminated with a rolling lubricant.

WO 2014/053657 A1 describes a process for treating a coiled aluminum foil or sheet comprising a direct flame impingement preheating step before annealing, which presents the advantage to remove the rolling lubricants.

Regarding an aluminium foil or sheet it is annealed at a temperature of typically 250 - 500 degrees Celsius.

Thus, the present invention relates a process to degrease a non-steel metal foil or sheet where the foil or sheet is contaminated with a lubricant, where the contaminated foil is coiled. The invention is characterized in that the foil or sheet coil is first uncoiled and thereafter coiled in a continuous process, in that after having been uncoiled the foil or sheet is subjected to DFI burners directed towards the foil or sheet on both sides of the foil or sheet so that the foil or sheet is heated from both sides of the foil or sheet, in that the distance from the burners to the foil or sheet, the fuel/oxidant ratio, the power of the burners and the speed of the foil or sheet when passing the burners are chosen such that the temperature of the foil or sheet is caused not to exceed the annealing temperature of the foil or sheet and that the fuel/oxidant ratio is over stoichiometric in the interval 1.02-1.03. Regarding using a chamber furnace the present invention solves the problems of reducing the long process time, reducing the high energy consumption and allow individual treatment of each coil. Further the present invention allows to choose the level of influence on the mechanical properties of the foil or /sheet via grain size. Still further, the lubricant is quickly removed from the foil.

Regarding chemical treatment the present invention eliminates the need for recycling and cleaning of spent chemicals and the need for depositing or destruction of cleaning byproducts, filter sludges etc...

Regarding said plasma process, the present invention eliminates the need for high voltage electricity and high investment costs.

Thus, the present invention offers a simple, low cost and fast way of removing the lubricant without effecting the mechanical properties of the foil or sheet.

Throughout the present application the terms foil and sheet are used. The present meaning of the term foil is a strip having a width between 200 millimeters up to 2.5 meters and a thickness between 5 and 200 micrometers. The present meaning of the term sheet is a sheet having a width of up to 2.5 meters and a thickness between 0.2 and 3 mm.

The term non-steel metal shall in particular include aluminium, copper and nickel.

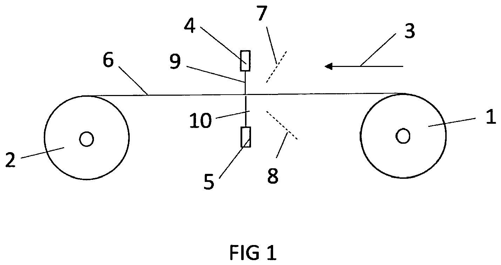

Below the invention is described in more detail, with reference to Figure 1 which illustrates the invention.

The present invention thus refers to a process to degrease a non-steel metal foil or sheet where the foil or sheet is contaminated with a lubricant, where the contaminated foil or sheet is coiled.

A non-steel metal foil or sheet is made using hot or cold rolling. Lubricants used in aluminium cold rolling mills are normally mixtures of hydrocarbons with properties similar to Kerosene, such as Alkanes, Naphthenes, Aromatic hydrocarbons, de-aromatized hydrocarbons.

Lubricants chosen for the rolling process should in particular have flash points below recrystallisation temperature of the metal alloy rolled. Such lubricants typically have a flash point of 40 - 65 degrees Celsius, where the flash point of a flammable liquid is the lowest temperature at which there will be enough flammable vapour to ignite when an ignition source is applied.

The auto ignition temperature is 205 - 220 degrees Celsius. The auto ignition temperature is the lowest temperature at which the lubricant will spontaneously ignite in a normal atmosphere without an external source of ignition, such as a flame or a spark.

The boiling temperature of the lubricants is 150 - 275 degrees Celcius.

Table with flash points of different lubricants:

| Oil Name | Flash Point |
|---|---|
| Gulfs Turbolene | 95°C |
| Vapol VG 50 - 200 | 150°C |
| Diesel Fuel | 40°C |
| AMSOIL | 232°C |
| Mobil 1 Super Syn | 235°C |

According to the invention a non-steel metal foil or sheet coil 1 is first uncoiled and thereafter coiled 2 in a continuous process, as illustrated by the arrow 3. After having been uncoiled the metal foil or sheet is subjected to DFI burners 4, 5 directed towards the foil 6 on both sides of the foil so that the foil is heated from both sides of the foil. Further according to the invention the distance from the burners 4, 5 to the foil/sheet, the fuel/oxidant ratio, the power of the burners 4, 5 and the speed of the foil or sheet when passing the burners are chosen such that the temperature of the foil 6 is caused not to exceed the annealing temperature of the foil or sheet.

The temperature of the lubricant, not shown, on the foil/sheet 6 is caused to exceed the flash point of the lubricant.

By using DFI burners 4, 5 the lubricant is heated very quickly to a temperature exceeding the flash point of the lubricant, and the vapor is ignited by the flames of the DFI burners. Thus the lubricant is burned away from the surface of the foil/sheet.

By selecting the distance from the burners 4, 5 to the foil/sheet, the fuel/oxidant ratio, the power of the burners 4, 5 and the speed of the foil/sheet when passing the burners it has proven possible to burn off the lubricants and at the same time not to exceed the annealing temperature of the foil/sheet.

The probable explanation is that the lubricant is heated to a higher temperature that the foil as the lubricant is hit by the flames before the flames hit the foil.

According to a preferred embodiment the temperature of the foil is at the maximum caused to be below the annealing temperature of the foil and in an interval of e.g. for aluminium 200 - 500 degrees Celsius.

According to another preferred embodiment the temperature of the foil/sheet is caused to be 150 - 250 degrees Celsius.

For other metal foil/sheet the recrystallisation temperature can be calculated with the equation from Tammann:

$$T_{RC} = (0.32 \ldots\ldots 0.43) * T_M \text{ (Kelvin)}$$

With $T_{RC}$ = Temperature of recrystallisation
and $T_M$ = Melting Temperature

Examples:

| Metal | Fe | Cu | Au | Al | Pb | Sn |
|---|---|---|---|---|---|---|
| $T_M$ (°C) | 1539 | 1080 | 1063 | 660 | 327 | 232 |

For most alloys the melting temperature and recrystallisation temperature can be found in literature or through own experiments.

Some examples are given for recrystallisation temperatures:

| Aluminium | 200 to 400 °C |
|---|---|
| Copper | 200 to 500°C |

(continued)

| Iron/steel | 400 to 700°C |
| Nickel | 500 to 700°C |

It is very advantageous to feed the DFI burners with an oxidant that contains at least 80 % by volume oxygen. This gives a very high flame temperature.

It is also advantageous that the fuel/oxidant ratio is over-stoichiometric in the interval 1.02 - 1.10.

It is preferred that the distance from each burner outlet opening and the foil is 50 - 300 millimeters.

A preferred total power output from the burners 4, 5 is 200 KW to 1000 KW power per meter foil width. Depending on the foil/sheet width and thickness the number of burners 4, 5 may vary. The burners 4, 5 are preferably arranged in a row running perpendicular to the transportation direction of the foil. In figure 1 the lines 9, 10 illustrates the flames from the burners.

The burners 4, 5 may be arranged so their longitudinal axis is perpendicular to the surface of the foil as shown in figure 1. However, the burners may instead make an angle to the surface of the foil, as illustrated by the dotted lines 7, 8 in figure 1.

Still further, it is preferred that the foil/sheet speed is 150 - 200 meters/minute.

The man skilled in the art has no difficulty to select the distance from the burners 4, 5 to the foil, the fuel/oxidant ratio, the power of the burners 4, 5 and the speed of the foil when passing the burners in order to burn off the lubricants and at the same time not exceed the annealing temperature of the foil.

Best results are achieved for degreasing the foil or sheet when the foil/sheet is heated just below the recrystallisation temperature.

The degree of removal of the lubricant may differ depending on what the foil/sheet shall be used for. Thus it is not always a goal to achieve a total removal of lubricant on the foil/sheet. However, it is certainly possible to remove all the lubricant by using the process of the present invention.

The second benefit of this invention is that it also allows to adjust the grain sizes of the metal sheet/foil by first heating the sheet to the desired temperature and then quickly cooling the sheet/foil below recrystallisation temperature.

In batch heating processes it usually takes several hours to soak the heat through the coil of foil/sheet. During this soaking process the outer and inner sheet/foil of the coil is exposed to temperatures above recrystallisation for several hours. During this phase the grains of the metal grow and the grain size cannot be controlled by cooling the foil/sheet. This new DFI burner heated technology will allow to heat the foil/sheet without having it exposed to temperatures above recrystallisation temperatures for hours.

## Claims

1.    Process to degrease a non-steel metal foil or sheet where the non-steel metal foil or sheet is contaminated with a lubricant, where the contaminated foil or sheet is coiled, **characterized in, that** the foil coil (1) is first uncoiled and thereafter coiled (2) in a continuous process, **in that** after having been uncoiled the metal foil or sheet (6) is subjected to DFI burners (4,5) directed towards the foil or sheet (6) on both sides of the foil or sheet so that the foil or sheet is heated from both sides of the foil or sheet, **in that** the distance from the burners (4, 5) to the foil or sheet (6), the fuel/oxidant ratio, the power of the burners (4,5) and the speed of the foil or sheet (6) when passing the burners are chosen such that the temperature of the foil or sheet (6) is caused not to exceed the annealing temperature of the foil or sheet and that the fuel/oxidant ratio is over stoichiometric in the interval 1.02 - 1.03.

2.    Process according to claim 1, **characterized in, that** the temperature of the lubricant on the foil or sheet (6) is caused to exceed the flash point of the lubricant.

3.    Process according to claim 1 or 2, **characterized in, that** the temperature of the foil or sheet (6) is at the maximum caused to be below the annealing temperature of the foil or sheet and is in an interval of 200 - 500 degrees Celsius for aluminium.

4.    Process according to claim 1, 2 or 3, **characterized in, that** the oxidant fed to the burners (4,5) contains at least 80 % by volume oxygen.

5.    Process according to any of the preceding claims, **characterized in, that** the distance from each burners (4,5) outlet opening and the foil or sheet is 50 - 300 millimeters.

6. Process according to any of the preceding claims, **characterized in, that** the total applied DFI burner power is 200 KW to 1000 KW power per meter foil or sheet (6) width.

7. Process according to any of the preceding claims, **characterized in, that** the foil or sheet speed is 150 - 200 meters/minute.

**Patentansprüche**

1. Verfahren zum Entfetten einer Metallfolie oder eines Metallblechs aus Nichteisenmetall, wobei die Metallfolie oder das Metallblech aus Nichteisenmetall mit einem Schmiermittel verunreinigt ist, wobei die verunreinigte Folie oder das verunreinigte Blech aufgewickelt ist, **dadurch gekennzeichnet, dass** die Folienrolle (1) in einem kontinuierlichen Verfahren zuerst abgewickelt und danach aufgewickelt (2) wird, dadurch, dass die Metallfolie oder das Metallblech (6) nach dem Abwickeln mit DFI-Brennern (4, 5) beflammt wird, die auf beiden Seiten der Folie oder des Blechs auf die Folie oder das Blech (6) gerichtet sind, sodass die Folie oder das Blech von beiden Seiten der Folie oder des Blechs erwärmt wird, dadurch, dass der Abstand von den Brennern (4, 5) zu der Folie oder dem Blech (6), das Brennstoff-Oxidationsmittel-Verhältnis, die Leistung der Brenner (4, 5) und die Geschwindigkeit der Folie oder des Blechs (6) beim Vorbeilaufen an den Brennern derart gewählt werden, dass bewirkt wird, dass die Temperatur der Folie oder des Blechs (6) die Glühtemperatur der Folie oder des Blechs nicht übersteigt und dass das Brennstoff-Oxidationsmittel-Verhältnis im Bereich 1,02 bis 1,03 überstöchiometrisch ist.

2. Verfahren nach Anspruch 1, **dadurch gekennzeichnet, dass** bewirkt wird, dass die Temperatur des Schmiermittels auf der Folie oder dem Blech (6) den Flammpunkt des Schmiermittels übersteigt.

3. Verfahren nach Anspruch 1 oder 2, **dadurch gekennzeichnet, dass** bewirkt wird, dass die Temperatur der Folie oder des Blechs (6) maximal unter der Glühtemperatur der Folie oder des Blechs und für Aluminium in einem Bereich von 200 bis 500 Grad Celsius liegt.

4. Verfahren nach Anspruch 1, 2 oder 3, **dadurch gekennzeichnet, dass** das den Brennern (4, 5) zugeführte Oxidationsmittel mindestens 80 Volumen-% Sauerstoff enthält.

5. Verfahren nach einem der vorhergehenden Ansprüche, **dadurch gekennzeichnet, dass** der Abstand von der Austrittsöffnung jedes Brenners (4, 5) zu der Folie oder dem Blech 50 bis 300 Millimeter beträgt.

6. Verfahren nach einem der vorhergehenden Ansprüche, **dadurch gekennzeichnet, dass** die gesamte eingesetzte DFI-Brennerleistung 200 KW bis 1000 KW Leistung pro Meter Breite der Folie oder des Blechs (6) beträgt.

7. Verfahren nach einem der vorhergehenden Ansprüche, **dadurch gekennzeichnet, dass** die Folien- oder Blechgeschwindigkeit 150 bis 200 Meter/Minute beträgt.

**Revendications**

1. Procédé de dégraissage d'une feuille ou d'une tôle métallique sans acier, la tôle ou la feuille métallique sans acier étant contaminée par un lubrifiant, la tôle ou la feuille contaminée étant enroulée, **caractérisé en ce que** la bobine de tôle (1) est d'abord déroulée, puis enroulée (2) dans un processus continu, **en ce qu'**après avoir été déroulée, la tôle ou la feuille métallique (6) est soumise à des brûleurs DFI (4, 5) dirigés vers la tôle ou la feuille (6) des deux côtés de la tôle ou de la feuille de sorte que la tôle ou la feuille est chauffée des deux côtés de la tôle ou de la feuille, **en ce que** la distance entre les brûleurs (4, 5) et la tôle ou la feuille (6), le rapport combustible/oxydant, la puissance des brûleurs (4, 5) et la vitesse de la tôle ou de la feuille (6) lors du passage des brûleurs sont choisis de telle sorte que la température de la tôle ou de la feuille (6) est amenée à ne pas dépasser la température de recuit de la tôle ou de la feuille et que le rapport combustible/oxydant est supérieur au rapport stœchiométrique dans la plage de 1,02 à 1,03.

2. Procédé selon la revendication 1, **caractérisé en ce que** la température du lubrifiant sur la tôle ou la feuille (6) est amenée à dépasser le point d'éclair du lubrifiant.

3. Procédé selon la revendication 1 ou 2, **caractérisé en ce que** la température de la tôle ou de la feuille (6) est amenée à être au maximum inférieure à la température de recuit de la tôle ou de la feuille et est dans un intervalle de 200 à 500 degrés Celsius pour l'aluminium.

4.  Procédé selon la revendication 1, 2 ou 3, **caractérisé en ce que** l'oxydant amené aux brûleurs (4, 5) contient au moins 80 % en volume d'oxygène.

5.  Procédé selon l'une quelconque des revendications précédentes, **caractérisé en ce que** la distance entre l'ouverture de sortie de chaque brûleur (4, 5) et la tôle ou la feuille est de 50 à 300 millimètres.

6.  Procédé selon l'une quelconque des revendications précédentes, **caractérisé en ce que** la puissance totale du brûleur DFI appliquée est de 200 KW à 1000 KW par mètre de largeur de tôle ou de feuille (6).

7.  Procédé selon l'une quelconque des revendications précédentes, **caractérisé en ce que** la vitesse de la tôle ou de la feuille est de 150 à 200 mètres/minute.

FIG 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7763117 A
- US 3052014 A
- WO 2014053657 A1